# DEMANDE DE BREVET EUROPEEN

(11) **EP 1 096 353 A1**
(43) Date de publication de la demande: **02.05.2001**
(21) Numéro de dépôt: 00402929.4
(22) Date de dépôt: 23.10.2000
(51) Int. Cl.: G05D 23/00, B60N 3/10

(54) **Dispositif et procédé de commande de température d'un récipient**

(30) Priorité: 26.10.1999 FR 9913367
(71) Demandeur: Brule, Patrice, 27700 Bouafles (FR)
(72) Inventeur: Brule, Patrice, 27700 Bouafles (FR); Gaillard, Ghislaine, 27700 Bouafles (FR)
(74) Mandataire: Michelet, Alain

(57) **Abrégé**

L'invention concerne un dispositif et un procédé de commande de température d'un récipient.

Le dispositif comprend une pièce de maintien (1) du récipient, des moyens de fixation (2) de la pièce de maintien sur un aérateur (10) et des moyens de circulation (32, 42, 53, 62-64) autour du récipient, d'air ventilé par l'aérateur.

Application à la commande de température d'un récipient dans un véhicule.

## Description

La présente invention se rapporte à un dispositif et à un procédé de commande de température d'un ou plusieurs récipients.

Il est connu de commander la température de récipients, tels que par exemple des bouteilles, des canettes, des biberons ou des bidons, de façon à les rendre plus frais ou plus chauds. Par exemple, un chauffe-biberon permet de réchauffer rapidement la température d'un biberon ou d'un petit pot pour enfant, et un réfrigérateur autorise un refroidissement rapide d'une boisson.

Les dispositifs existants fonctionnent cependant généralement avec une prise ou des piles et nécessitent un espace de positionnement stable. Ces particularités peuvent dans certaines situations s'avérer embarrassantes, notamment dans un véhicule tel que par exemple une voiture, un camion, un train ou une moto.

La présente invention concerne un dispositif et un procédé de commande de température d'un ou plusieurs récipients, qui ne requiert aucune alimentation spécifique en énergie telle qu'une prise ou des piles, ni aucun support de positionnement stable. A cet effet, l'invention a pour objet un dispositif de commande de température d'au moins un récipient, comprenant au moins une pièce de maintien du récipient.

Selon l'invention, le dispositif comprend:
- des moyens de fixation de la pièce de maintien sur au moins un aérateur et
- des moyens de circulation autour du récipient, d'air ventilé par l'aérateur.

Ainsi, il est directement fait usage d'un moyen déjà existant, l'aérateur, et l'on peut réchauffer ou refroidir le récipient par échange thermique, grâce à l'air ventilé par cet aérateur. De plus, l'invention assure la stabilité du récipient qui est fixé à l'aérateur.

La « commande de température » peut consister à refroidir ou à réchauffer le récipient, ou à le maintenir frais ou chaud.

Préférentiellement, le dispositif comprend des moyens de réglage en translation de la pièce de maintien par rapport à l'aérateur.

On peut ainsi l'adapter à différents types d'aérateurs, notamment ceux de divers véhicules.

Les moyens de réglage en translation comprennent alors avantageusement une pièce de réglage réglable en translation par rapport à l'aérateur, préférentiellement par vis ou par agrafe, et prévue pour être fixée à la pièce de maintien.

Ainsi, les moyens de réglage autorisent le déplacement relatif d'un premier ensemble comprenant la pièce de réglage et la pièce de maintien du récipient, par rapport à un second ensemble comprenant les moyens de fixation et l'aérateur.

Dans un mode de réalisation d'un tel dispositif, les moyens de fixation sont solidarisables à l'aérateur, de telle sorte que le premier ensemble ci-dessus est mobile en translation par rapport au second ensemble comprenant l'aérateur et les moyens de fixation.

Dans un autre mode de réalisation, les moyens de fixation sont solidarisables à la pièce de réglage, de telle sorte que le premier ensemble mobile en translation par rapport à l'aérateur comprend aussi les moyens de fixation.

Dans une forme préférée de la pièce de maintien, celle-ci est une boîte pourvue d'au moins une ouverture, cette ouverture étant prévue pour être disposée face à l'aérateur de manière à permettre un écoulement sur le récipient de l'air ventilé par l'aérateur. Cette ouverture est avantageusement une unique ouverture latérale, couvrant un secteur angulaire préférentiellement supérieur à 45°.

Dans une variante de réalisation de la boîte avec ouvertures, ces dernières sont pratiquées dans le fond de la boîte. Cette variante convient lorsque l'entrée du flux d'air se produit inférieurement, notamment pour un raccordement à un aérateur d'un train.

De plus, la boîte comprend préférentiellement un couvercle pourvu d'au moins une ouverture, cette ou ces ouvertures étant prévues pour évacuer l'air ventilé par l'aérateur sur le récipient. Les ouvertures du couvercle consistent alors avantageusement en une pluralité d'ouvertures périphériques, prévues pour être disposées à l'opposé de l'aérateur par rapport au récipient.

Dans un mode de réalisation préféré des moyens de fixation sur l'aérateur, ceux-ci comprennent au moins une languette reliée à la pièce de maintien et terminée par au moins un crochet flexible. Ce ou ces crochets sont prévus pour traverser en se déformant une grille de l'aérateur lors d'un positionnement ou d'un retrait du dispositif et pour rester bloqués intérieurement contre la grille en l'absence d'un effort de retrait.

L'effort de retrait peut consister en une traction perpendiculaire à la grille, qui a pour effet de déformer le crochet. Elle peut aussi consister, en particulier, en un mouvement de rotation des moyens de fixation, rendant possible une extraction du crochet entre les barreaux de la grille. De manière générale, les efforts de retrait à appliquer dépendent de la configuration particulière et de l'emplacement des crochets.

Avantageusement, le ou les crochets ont une section sensiblement triangulaire, ayant une base reliée à la languette associée et préférentiellement perpendiculaire à cette languette et à un sommet opposé à cette languette. Cette forme particulière permet de maintenir efficacement le dispositif de commande de température contre l'aérateur, tout en facilitant l'introduction des crochets entre les barreaux de la grille. De plus, cette forme triangulaire autorise une extraction par déformation des crochets.

Préférentiellement, les languettes portant les crochets sont également flexibles, ce qui facilite les mouvements de positionnement, et surtout d'extraction, du dispositif. Ainsi, dans une forme de réalisation avantageuse particulière, les languettes flexibles sont terminées par des crochets flexibles plats, ayant une section sensiblement triangulaire comme indiqué ci-dessus.

Dans un autre mode de réalisation préféré des moyens de fixation sur l'aérateur, ceux-ci comprennent au moins une agrafe reliée à la pièce de maintien et capable d'être fixée à une grille de l'aérateur par pincement de cette grille.

Ces agrafes remplissent alors avantageusement elles-mêmes la fonction de réglage en translation du dispositif par rapport à l'aérateur.

Selon une forme avantageuse de réalisation avec languettes et/ou agrafes, les moyens de fixation comprennent au moins des languettes et/ou des agrafes et le dispositif comprend des moyens d'ajustement latéral d'espacements entre les languettes et/ou agrafes.

Deux types de réglage peuvent donc être présents dans le dispositif, séparément ou en combinaison: le réglage en translation par rapport à l'aérateur et celui en largeur, avantageusement parallèle à la surface de l'aérateur. Le dispositif peut ainsi bénéficier d'une grande souplesse d'adaptation à de nombreux types d'aérateurs.

L'invention a également pour objet un procédé de commande de température d'un récipient, dans lequel on associe le récipient à une pièce de maintien.

Selon l'invention, on fixe la pièce de maintien à un aérateur et on fait circuler autour du récipient de l'air ventilé par l'aérateur. L'invention concerne également l'application du dispositif ou du procédé de l'invention à une commande de température d'un récipient dans un véhicule.

L'invention sera mieux comprise et illustrée au moyen de l'exemple qui suit d'un mode particulier de réalisation, nullement limitatif, en référence aux dessins annexés sur lesquels:
- la figure 1 montre en perspective les différents éléments constituant un premier mode de réalisation d'un dispositif de commande de température selon l'invention;
- la figure 2 représente le dispositif de la figure 1, installé sur un aérateur, en coupe II-II;
- la figure 3 montre le dispositif des figures 1 et 2 assemblé comme sur la figure 2, en demi-coupe III-III (partie supérieure) et en demi-vue de dessus (partie inférieure);
- la figure 4 montre une première étape de montage à un aérateur, du dispositif des figures 1 à 3;
- la figure 5 montre une deuxième étape de montage à l'aérateur de la figure 4, du dispositif des figures 1 à 3;
- la figure 6 montre une troisième étape de montage à l'aérateur des figures 4 et 5, du dispositif des figures 1 à 3;
- la figure 7 montre une quatrième étape de montage à l'aérateur des figures 4 à 6, du dispositif des figures 1 à 3;
- la figure 8 montre une cinquième étape de montage à l'aérateur des figures 4 à 7, du dispositif des figures 1 à 3;
- la figure 9 montre un réglage en hauteur du dispositif monté selon les étapes des figures 4 à 8;
- la figure 10 représente un enjoliveur adapté au dispositif des figures 1 à 3;
- la figure 11 montre l'enjoliveur de la figure 10 installé en combinaison avec certains des éléments du dispositif des figures 1 à 3 sur l'aérateur des figures 4 à 6;
- la figure 12 montre en perspective les différents éléments constituant un deuxième mode de réalisation d'un dispositif de commande de température selon l'invention;
- la figure 13 représente plusieurs des éléments du dispositif de la figure 12 assemblés;
- la figure 14 montre en perspective les différents éléments constituant un troisième mode de réalisation d'un dispositif de commande de température selon l'invention; et
- la figure 15 représente plusieurs des éléments du dispositif de la figure 14 assemblés.

Le contenu des figures doit être considéré comme faisant parie intégrante de l'exposé de l'invention, y compris à titre complémentaire de la description.

Par ailleurs, dans les trois modes de réalisation décrits, des éléments identiques sont repérés par les mêmes références.

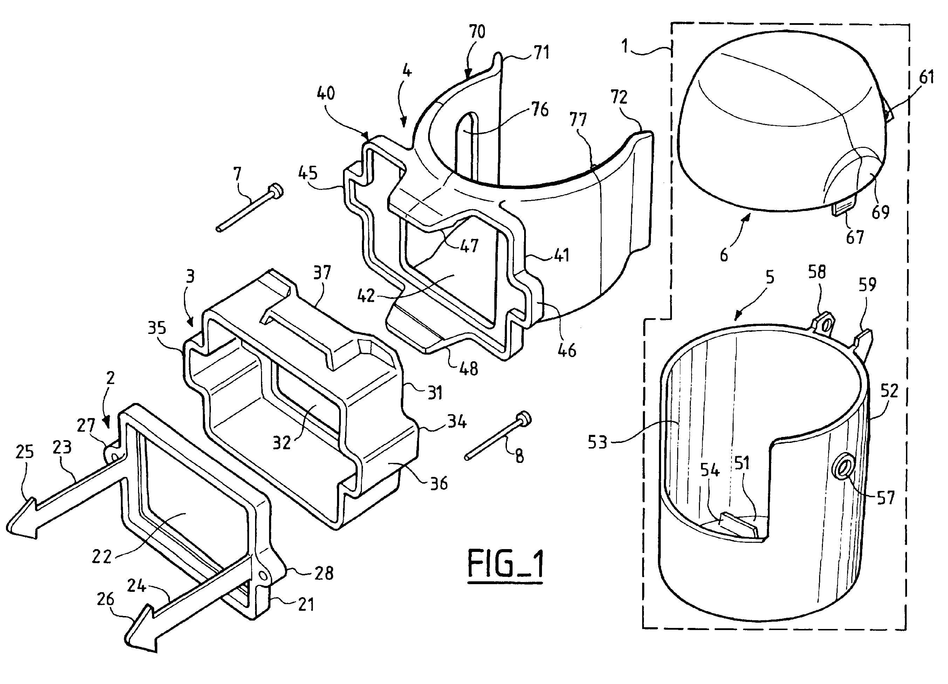

Un dispositif de commande de température (figure 1) comprend dans un premier mode de réalisation une boîte 1 destinée à recevoir un récipient, une pièce de fixation 2 de la boîte 1 à un aérateur, une pièce de réglage 3 en translation de la boîte 1 par rapport à la pièce de fixation 2, donc à l'aérateur et une pince 4 prévue pour être fixée à la pièce de réglage 3 et pour enserrer la boîte 1.

La boîte 1 comprend elle-même un porte-récipient 5 fermé par un couvercle 6. Le porte-récipient 5 (figures 1 à 3) a un fond constitué d'un support 51 recouvert de nervures 54-55, destiné à porter un récipient. La boîte 1 comprend aussi une paroi cylindrique 52 de section circulaire, pourvue d'une large ouverture 53 pratiquée entre la partie supérieure et approximativement la moitié de la paroi 52 et couvrant un secteur angulaire approximativement égal à 90°. L'ouverture 53 définit une zone frontale du porte-récipient 5, prévue pour le passage de l'air ventilé par l'aérateur.

Latéralement par rapport à cette zone frontale, le porte-récipient 5 comprend des tétons de guidage 57, destinés au positionnement vertical de la boîte 1 par rapport à la pince 4. De plus, le porte-récipient 5 est muni dans sa partie arrière (par rapport à la zone frontale) supérieure de deux pivots 58 et 59, prévus pour l'articulation du couvercle 6.

Le couvercle 6, prévu pour fermer la boîte 1 après mise en place d'un récipient, est pourvu de trous d'évacuation 62-64 pratiqués en périphérie, préférentiellement d'un seul côté du couvercle 6 et dans un secteur angulaire avantageusement inférieur à 45°. Ces trous 62-64 sont destinés à évacuer l'air traversant le porte-récipient 5 vers l'arrière de la boîte 1, c'est-à-dire à l'opposé de l'ouverture frontale 53. Leur localisation permet de canaliser le passage de l'air. Le couvercle 6 comprend aussi une broche 61 débordant extérieurement sous les trous 62-64 et prévue pour être articulée dans les pivots 58 et 59 du porte-récipient 5, de manière à former une charnière 70. De plus, il est muni latéralement, en partie inférieure, de deux languettes de verrouillage 66 (non représentée) et 67, surmontées respectivement par deux prises pour doigt 68 (non représentée) et 69. Ainsi, le couvercle 6 a une double fonction de protection du récipient et d'évacuation de l'air utilisé.

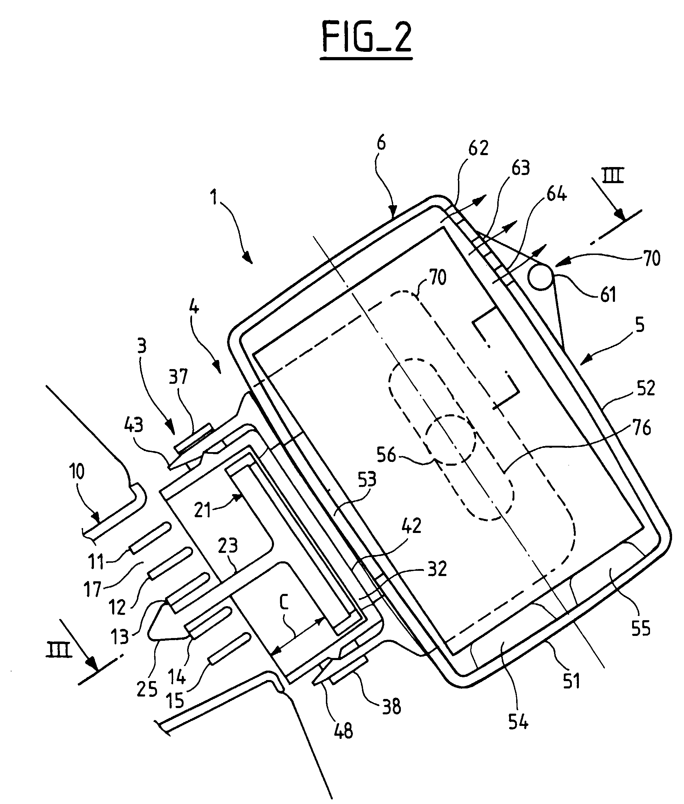

La pièce de fixation 2 comprend un cadre 21 rectangulaire délimitant une ouverture centrale 22 également rectangulaire, prévue pour le passage de l'air ventilé par l'aérateur. Le cadre 21 est prolongé latéralement par deux languettes 23 et 24 plates et flexibles. Ces languettes 23 et 24 s'étendent perpendiculairement au plan du cadre 21 et ont leur largeur orientée parallèlement aux bords latéraux du cadre 21. Chacune de ces languettes 23 ou 24 est prolongée respectivement par un crochet 25 ou 26 flexible et plat, formant une seule pièce avec la languette 23 ou 24 associée. Ces crochets 25 et 26 sont approximativement triangulaires et ont chacun une base reliée respectivement à la languette 23 ou 24, perpendiculairement à cette languette, et un sommet opposé à cette languette 23 ou 24. Les languettes 23 et 24 et les crochets 25 et 26 autorisent, par leur forme, leur constitution flexible et leur disposition (figure 2):
- une introduction des crochets 25 et 26 derrière la grille 17 d'un aérateur 10, entre des barreaux 11-15 voisins de cette grille 17,
- un blocage des crochets 25 et 26 derrière et contre certains des barreaux 11-15 de la grille 17, permettant de maintenir l'ensemble du dispositif de commande de température en position et
- une extraction des crochets 25 et 26, permettant un retrait du dispositif.

La pièce de fixation 2 comprend également des bossages taraudés 27 et 28 en saillie par rapport aux bords latéraux du cadre 21, respectivement à la base des languettes 23 et 24. Ces bossages taraudés 27 et 28 sont destinés à un positionnement de la pièce de réglage 3 au moyen de vis de fixation et de réglage 7 et 8.

La pièce de réglage 3 comprend un cadre 31 épais ayant une forme approximativement rectangulaire, délimitant une ouverture 32 sensiblement rectangulaire. Cette ouverture 32 est destinée au passage de l'air en provenance de l'aérateur. Le cadre 31 est muni respectivement en positions supérieure et inférieure de saillies rainurées 37 et 38 formant logements, prévues pour la fixation de la pince 4. Il dispose latéralement et vers l'avant de deux plaques taraudées 33 et 34, respectivement de part et d'autre de l'ouverture 32. Ces plaques 33 et 34 sont respectivement prolongées par des couloirs 35 et 36 latéraux du cadre 31 formant saillies. Ces plaques taraudées 33 et 34 et les couloirs 35 et 36 correspondants sont destinées à l'introduction, au guidage et à l'ajustement des bossages taraudés 27 et 28 au moyen des vis de réglage 7 et 8. Ainsi, la pièce de réglage 3 permet le réglage en profondeur sur une course de réglage C (figure 2) et une bonne tenue du dispositif.

La pince 4 comprend essentiellement une base 40 approximativement rectangulaire, prévue pour être fixée à la pièce de réglage 3, et une ceinture 70 cylindrique portée par la base 40, prévue pour enserrer le porte-récipient 5.

La base 40 comprend un cadre 41 approximativement rectangulaire, délimitant une ouverture 42 rectangulaire. Ce cadre 41 est prolongé supérieurement et inférieurement respectivement par deux pattes d'attache 47 et 48 flexibles, destinées à être respectivement introduites dans les saillies rainurées 37 et 38 de la pièce de réglage 3.

Le cadre 41 est prolongé latéralement par respectivement deux caches 45 et 46, prévus respectivement pour recouvrir les saillies rainurées 37 et 38 une fois les vis 7 et 8 mises en place.

La ceinture 70 cylindrique, fixée au cadre 41, est percée également de l'ouverture 42. Elle a une section sensiblement semicirculaire et comprend des bords latéraux prolongés par des rebords sortants formant guides de montage 71 et 72. De plus, des gorges de réglage 76 et 77 sont pratiquées latéralement dans la ceinture 70. Elles sont destinées à recevoir respectivement les tétons 56 et 57 du porte-récipient 5 pour un positionnement vertical de la boîte 1.

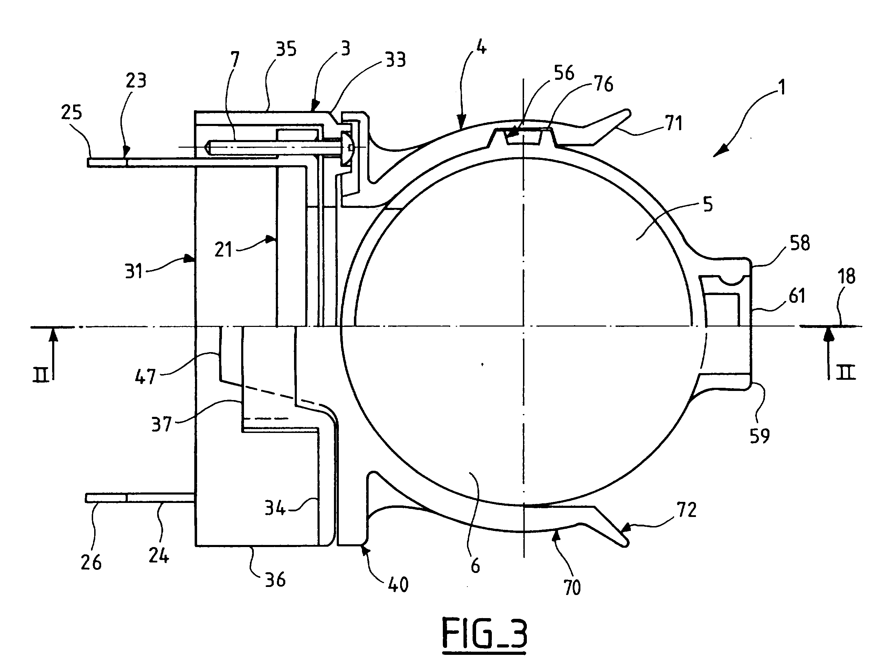

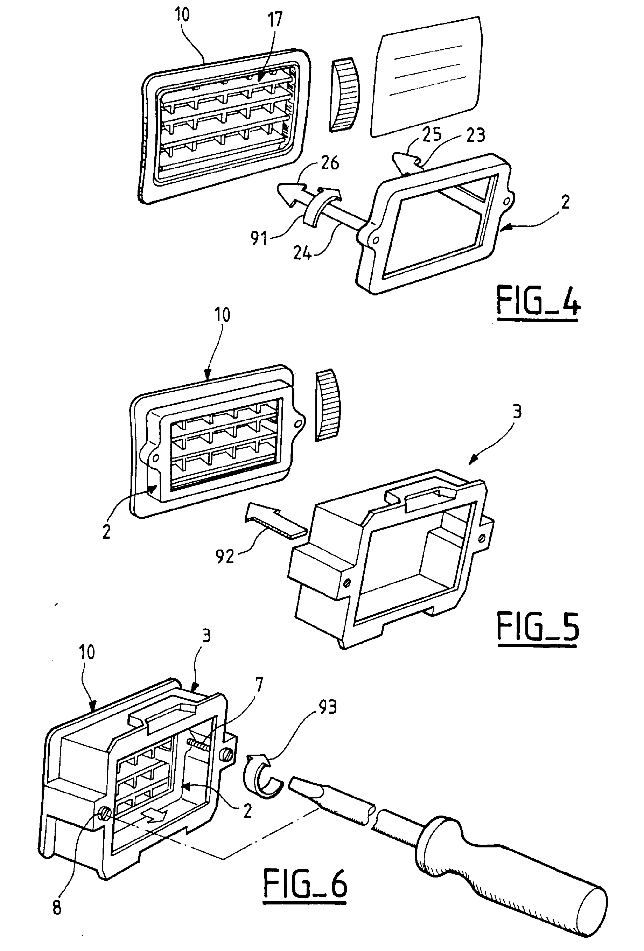

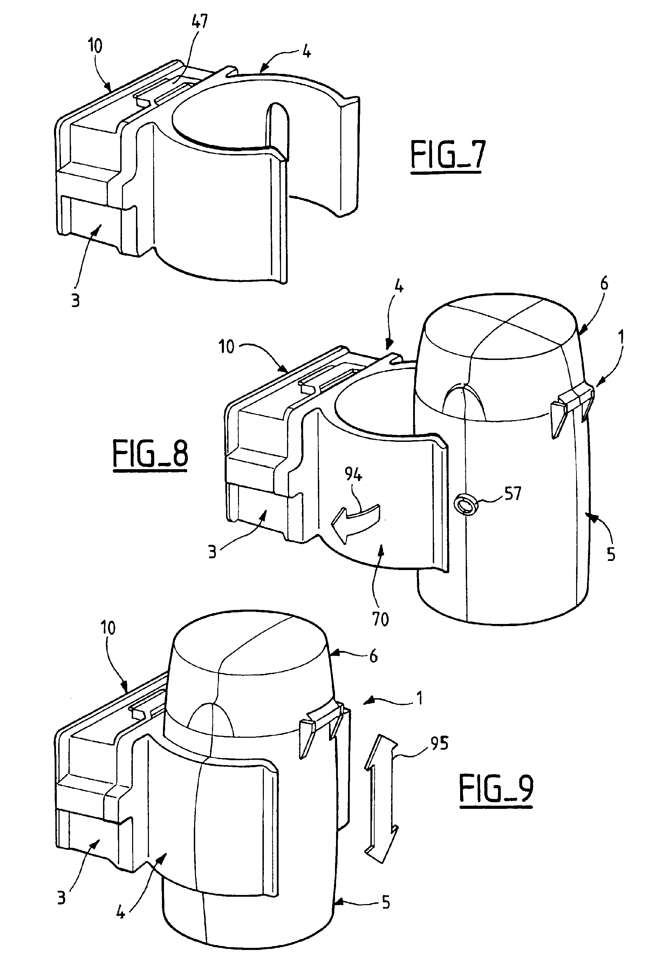

Pour le montage du dispositif, on procède avantageusement comme suit:
- on place la pièce de fixation 2 sur la grille 17 de l'aérateur 10 (figure 4), par exemple au moyen d'une rotation 91 manuelle des languettes 23 et 24;
- on monte la pièce de réglage 3 sur la pièce de fixation 2 (figure 5) par une translation 92 et on ajuste sa position par rapport à la pièce de fixation 2 (figure 6) en la vissant au moyen des vis 7 et 8 (vissage 93);
- on fixe la pince 4 sur la pièce de réglage 3 au moyen des pattes d'attache 47 et 48 (figure 7); et
- on bloque le porte-récipient 5 dans la ceinture 70 de la pince 4 et on monte le couvercle 6 sur le porte-récipient 5 (figure 8);
   les éléments 1 à 6 étant alignés selon un axe 18 perpendiculaire à la grille 17 (figure 3).

Il est également utile d'effectuer un réglage 95 en hauteur de la boîte 1 par rapport à la pince 4 (figure 9), par le coulissement des tétons 56 et 57 dans les gorges de réglage 76 et 77.

Le dispositif est ainsi en place et prêt à recevoir un récipient à l'intérieur du porte-récipient 5, tel que par exemple un gobelet, une bouteille, une canette, un biberon ou un bidon.

Ces opérations peuvent être effectuées selon tout autre ordre approprié que celui indiqué. En particulier, le dispositif peut être entièrement monté avant d'être adapté à l'aérateur 10, notamment lorsque le réglage en translation de la pièce de réglage 3 a déjà été effectué auparavant pour un aérateur du même type. D'autre part, même quand un ajustement est nécessaire, les éléments 4, 5 et 6 peuvent être déjà pré-assemblés entre eux, ainsi que les éléments 2 et 3 au moyen des vis 7 et 8. Il suffit alors d'ajuster le positionnement de la pièce de réglage 3 en fonction de l'aérateur utilisé, avant de fixer l'ensemble comprenant les éléments 4, 5 et 6 à la pièce de réglage 3.

En fonctionnement, un récipient étant disposé dans le porte-récipient 5, on referme le couvercle 6, on met en route la ventilation et on ouvre l'aérateur 10 pour permettre le passage de l'air. L'air est alors canalisé et arrive dans la boîte 1. Elle en sort par les trous 62-64 prévus à cet effet. Lors du passage de l'air sur le récipient, un échange thermique se produit et la température du liquide contenu dans le récipient s'en trouve modifiée (rafraîchissement ou réchauffement) ou maintenue (pour garder une boisson fraîche ou chaude).

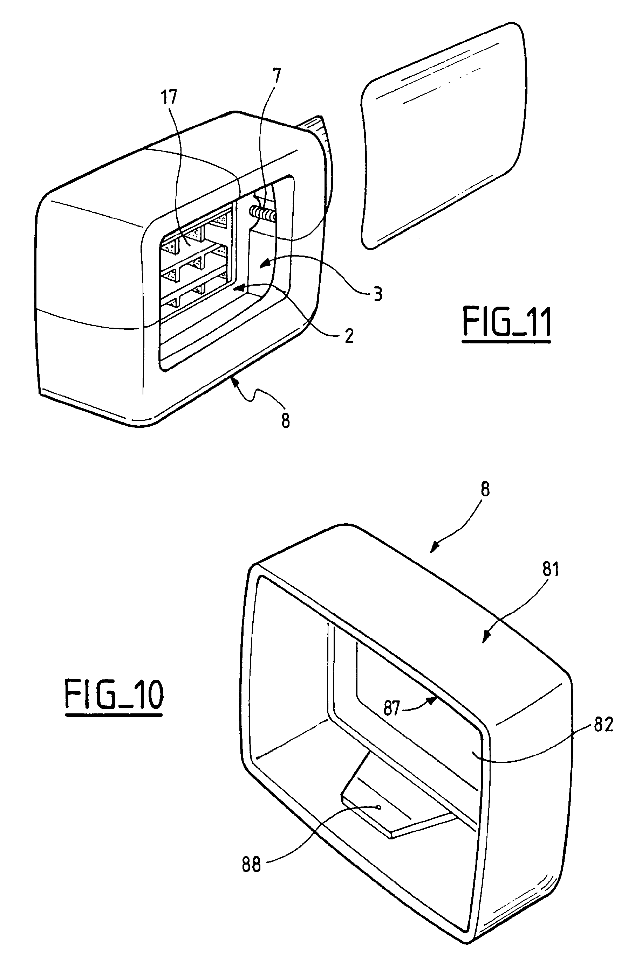

Préférentiellement, on dispose d'un enjoliveur 8 (figure 10), destiné à recouvrir certains des éléments fixés à l'aérateur 10 en cas de non utilisation de ce dispositif. L'enjoliveur 8 comprend essentiellement un cadre 81 approximativement rectangulaire, délimitant une ouverture 82 elle-même approximativement rectangulaire, et deux pattes de fixation supérieure 87 et inférieure 88. Ces pattes 87 et 88 sont formées à l'intérieur du cadre 81 et sont prévues pour s'insérer dans les saillies rainurées 37 et 38 de la pièce de réglage 3.

On monte l'enjoliveur 8 par dessus la pièce de fixation 2 et la pièce de réglage 3, fixée au moyen des vis 7 et 8, qui sont déjà en place sur l'aérateur 10 (figure 11). L'enjoliveur, qui reprend l'allure approximative d'un aérateur, permet ainsi d'éviter un démontage systématique de tous les éléments du dispositif lorsque ce dernier n'est pas utilisé, tout en ayant une fonction esthétique et de protection contre les risques d'accrochage.

On peut par exemple mettre en place les pièces de fixation 2 et de réglage 3 (figures 4 à 6) et les recouvrir immédiatement de l'enjoliveur 8, jusqu'à ce qu'on souhaite avoir recours au dispositif. De même, après utilisation, on peut ôter la pince 4 portant la boîte 1 et mettre en place l'enjoliveur 8, jusqu'à un nouvel usage. Ainsi, on évite de réitérer les étapes les plus fastidieuses du montage, à savoir l'installation de la pièce de fixation 2 et de la pièce de réglage 3, sans pour autant laisser en saillie sur l'aérateur 10 des pièces inesthétiques et anguleuses.

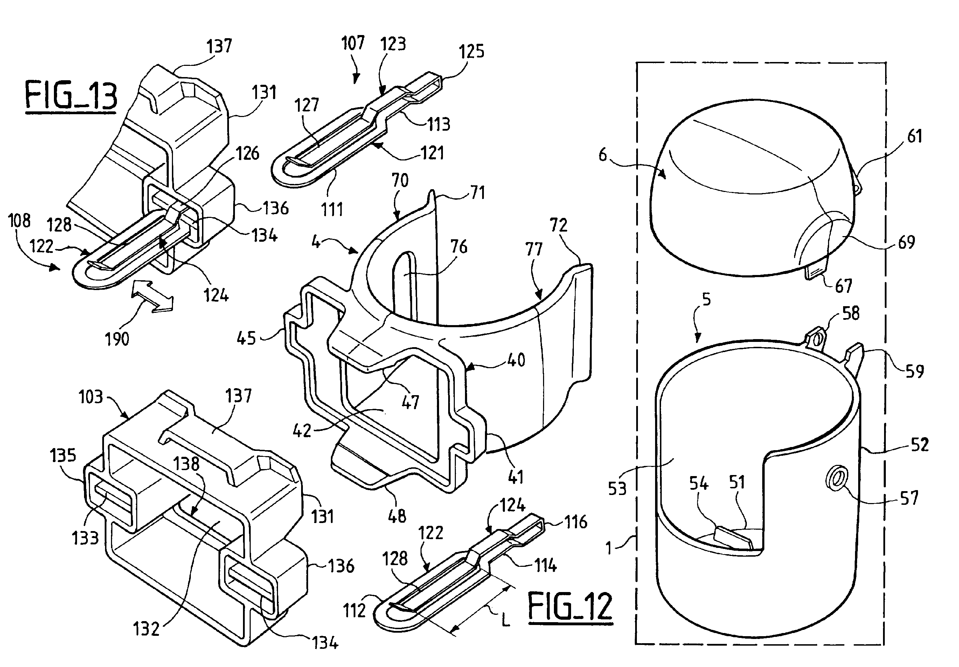

Dans un deuxième mode de réalisation du dispositif (figures 12 et 13), le mode de fixation et de réglage diffère de celui du premier mode de réalisation. La boîte 1 et la pince 4 sont donc inchangées, mais la pièce de fixation 2, la pièce de réglage 3 et les vis 7 et 8 sont remplacées par un autre système comprenant une pièce de réglage 103 et deux agrafes 107 et 108.

La pièce de réglage 103 comprend un cadre 131 approximativement rectangulaire, délimitant une ouverture 132 elle-même approximativement rectangulaire. Des saillies rainurées 137 et 138 sont respectivement disposées par dessus et par dessous le cadre 131, et servent respectivement de logements pour les pattes d'attache 47 et 48 de la pince 4. La pièce de réglage 103 est pourvue latéralement de part et d'autre de l'ouverture 132, de deux logements 135 et 136 contenant respectivement deux nervures horizontales 133 et 134. Ces nervures 133 et 134 sont destinées à la fixation des agrafes 107 et 108.

Chacune des agrafes 107 et 108 est métallique et flexible. Elle comprend essentiellement une base 121 ou 122 allongée, surmontée d'une languette 123 ou 124 s'étendant parallèlement à la base 121 ou 122. Les languettes 123 et 124 sont respectivement raccordées aux bases 121 et 121 par des articulations 125 et 126.

Chacune des bases 121 et 122 comprend une partie plate 111 ou 112 approximativement rectangulaire et creuse, prolongée par une tige 113 ou 114 raccordée à l'articulation 125 ou 126. Chacune des languettes 123 ou 124 est quant à elle pourvue d'une zone de pincement 127 ou 128 disposée au-dessus de la partie plate 111 ou 112 de la base 121 ou 122.

Pour une mise en place des agrafes 107 et 108 (figure 13), on insère ces dernières respectivement dans les logements 135 et 136 autour des nervures 133 et 134, en pinçant les nervures 133 et 134 entre les tiges 113 et 114 et les parties allongées des languettes 123 et 124 correspondantes. On peut effectuer un réglage latéral 190 des agrafes 107 et 108 pour adaptation à l'aérateur 10. On fixe ensuite les agrafes 107 et 108 sur la grille 17 de l'aérateur 10, par pincement d'un des barreaux 11-15 horizontaux, entre les parties plates 111 et 112 des bases 121 et 122 et les zones de pincement 127 et 128 des languettes 123 et 124. On règle en profondeur le positionnement de la pièce de réglage 103 en adaptant la position des agrafes 107 et 108 sur la longueur L des zones de pincement 127 et 128.

Avantageusement, on a recours à un enjoliveur comme dans le premier mode de réalisation.

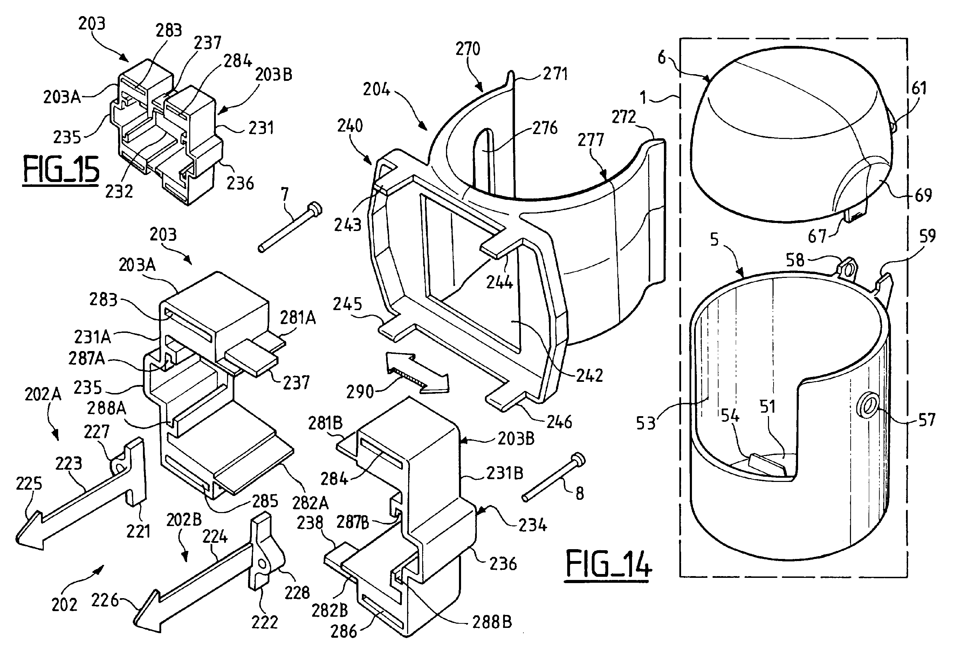

Un troisième mode de réalisation du dispositif (figure 14), avec languettes pour les moyens de fixation, autorise un réglage en largeur du positionnement des languettes. Ce mode de réalisation met en oeuvre une boîte identique à celle du premier mode de réalisation ainsi que des vis de réglage 7 et 8, mais la pièce de fixation 2, la pièce de réglage 3 et la pince 4 du premier mode de réalisation sont remplacées par des moyens de fixation 202, une pièce de réglage 203 et une pince 204.

Les moyens de fixation 202 comprennent deux parties dissociées 202A et 202B, qui comprennent chacune une languette 223 ou 224 prolongée par un crochet 225 ou 226, similaires à ceux du premier mode de réalisation et ayant les mêmes fonctions. Les parties 202A et 202B des moyens de fixation 202 comprennent aussi respectivement des bossages taraudés 227 et 228, portés par des plaquettes verticales 221 et 222. Les plaquettes 221 et 222 et les bossages taraudés 227 et 228 ont vocation à coulisser dans la pièce de réglage 203, de manière à autoriser un réglage en profondeur par rapport à l'aérateur 10.

La pièce de réglage 203 est constituée de deux composants latéraux 203A et 203B prévus pour s'emboîter (figures 14 et 15), avec un écart ajustable autorisant un réglage en largeur 290.

Chacun des composants 203A et 203B comprend une bordure 231A ou 231B en forme de U renversé, pourvue d'un logement supérieur 283 et 284 d'un logement inférieur 285 ou 286, destinés à recevoir des pattes de fixation de la pince 204. Des couloirs 235 et 236 latéraux sont respectivement pratiqués en saillie dans chacune des bordures 231A et 231B. Chacun de ces couloirs 235 et 236 est bordé supérieurement par une fente 287A ou 287B et inférieurement par une fente 288A ou 288B, et est fermée d'un seul côté par une plaque taraudée 233 ou 234. Les composants 203A et 203B étant prévus pour être disposés de façon à ce que les ouvertures de leurs bordures 231A et 231B en forme de U soient en vis-à-vis et, la pièce de réglage 203 ainsi formée ayant un côté arrière vers l'aérateur 10 et un côté avant opposé à l'aérateur 10, les plaques 233 et 234 sont disposées vers l'avant. Les couloirs 235 et 236 et les fentes 287A, 287B, 288A et 288B associées sont destinées au coulissement respectif des plaquettes 221 et 222 et des bossages taraudés 227 et 228 des moyens de fixation 202. Les plaques taraudées 233 et 234 sont quant à elles destinées à l'ajustement des moyens de fixation au moyen des vis de réglage 7 et 8, comme dans le premier mode de réalisation.

Chacune des bordures 231A et 231B est prolongée latéralement par des lamelles de guidage d'air supérieure 281A ou 281B et inférieure 282A et 282B. Les lamelles supérieures 281A et 281B sont légèrement décalées en hauteur l'une par rapport à l'autre, de même que les lamelles inférieures 282A et 282B, de manière à autoriser une superposition des deux lamelles supérieures 281A et 281B ou inférieures 282A et 282B lors de l'assemblage des deux composants 203A et 203B. De plus, la lamelle 281A est surmontée d'une patte de guidage 237 flexible, débordant la lamelle 281A, capable de maintenir en une position donnée la lamelle supérieure 281B contre la lamelle supérieure 281A. De façon similaire, une patte de guidage 238 est placée sous la lamelle inférieure 282B et rend possible un maintien en position de la lamelle inférieure 242A contre la lamelle inférieure 282B.

La pince 204 comprend essentiellement, comme la pince 4 du premier mode de réalisation, une base 240 approximativement rectangulaire délimitant une ouverture 242 rectangulaire, et une ceinture 270 cylindrique, ayant une section sensiblement semicirculaire. La ceinture 270 est similaire à la ceinture 70 du premier mode de réalisation et comprend, comme cette dernière, des guides de montage 271 et 272 et des gorges de réglage 276 et 277, l'ouverture 242 étant également pratiquée dans la ceinture 270.

La base 240 est quant à elle pourvue de quatre pattes de fixation 243-246 approximativement disposées aux quatre coins de cette base 240 et destinées à être insérées respectivement dans les logements 283-286 de la pièce de réglage 203 une fois montée. Les pattes 243 à 246 ont une largeur suffisamment petite par rapport à celle des logements 283 à 286 pour autoriser un coulissement latéral des deux composants 203A et 203B de la pièce de réglage 203 l'un par rapport à l'autre.

Lors d'un montage, on peut par exemple insérer les parties 202A et 202B des moyens de fixation 202 dans respectivement les composants 203A et 203B de la pièce de réglage 203, et assembler les composants 203A et 203B. On peut ensuite effectuer conjointement l'adaptation en profondeur et en largeur de l'ensemble ainsi formé par rapport à l'aérateur 10, en ajustant l'écart entre les composants 203A et 203B et en adaptant le positionnement des parties 202A et 202B dans la pièce de réglage 203 au moyen des vis 7 et 8. Une fois ces réglages effectués, il ne reste plus qu'à fixer la pince 204 avec la boîte 1, par insertion des pattes 243 à 246 dans les logements 283 à 286.

Avantageusement, on a recours à un enjoliveur comme dans les deux premiers modes de réalisation, le système de fixation de l'enjoliveur sur la pièce de réglage 203 étant similaire à celui de la pince 204.

## Revendications

1. Dispositif de commande de température par de l'air ventilé par un aérateur (10) d'au moins un récipient disposé dans une boite (1), ledit dispositif étant fixé sur l'aérateur (10) par des moyens de fixation comportant au moins une pièce de fixation (2, 202), ladite boîte étant pourvue d'au moins une ouverture (53), ladite ouverture étant prévue pour être disposée face audit aérateur (10) de manière à permettre un écoulement autour dudit récipient de l'air ventilé canalisé par des moyens de circulation (22, 32, 42, 53, 62-64, 132, 232, 242), le dispositif comportant en outre des moyens de réglage (3, 7, 8, 203) en translation de la pièce de fixation (2, 202) par rapport audit aérateur (10) caractérisé en ce que les moyens de réglage (3, 7, 8, 203) en translation comprennent une pièce de réglage (3, 203), le réglage en translation de la pièce de fixation (2, 202) étant assuré par vis (7, 8) entre ladite pièce de fixation (2, 202) et ladite pièce de réglage (3, 203), et en ce que la pièce de fixation (2, 202) comprend au moins une languette (23-24, 223-224) terminée par au moins un crochet flexible (25-26, 225-226), ledit crochet étant prévu pour traverser en se déformant une grille (17) dudit aérateur (10) lors d'un positionnement ou d'un retrait du dispositif et pour rester bloqué intérieurement contre ladite grille (17) en l'absence d'un effort de retrait.

2. Dispositif de commande de température selon la revendication 1, caractérisé en ce que la pièce de fixation et la vis de réglage des moyens de fixation sont remplacés par au moins une agrafe (107-108) reliée à la pièce de réglage (103, 203) et capable d'être fixée à la grille (17) dudit aérateur (10) et à la pièce de réglage par respectivement pincement ladite grille et de ladite pièce de réglage.

3. Dispositif de commande de température selon l'une des revendications 1 ou 2, caractérisé en ce que lesdits moyens de fixation (107-108) comprennent au moins deux desdites languettes (223-224) et/ou desdites agrafes (107-108) et en ce que ledit dispositif comprend des moyens d'ajustement latéral (133-134, 203) d'espacements entre lesdites languettes (223-224) et/ou agrafes (107-108).

4. Dispositif selon l'une quelconque des revendications précédentes caractérisé en ce que la boite (1) est enserrée dans une pince (4, 204), ladite pince étant fixée sur la pièce de réglage (3, 103, 203).

5. Dispositif de commande de température selon l'une quelconque des revendications précédentes, caractérisé en ce que l'ouverture (53) est une unique ouverture latérale, couvrant un secteur angulaire préférentiellement supérieur à 45°.

6. Dispositif de commande de température selon l'une quelconque des revendications précédentes, caractérisé en ce que la boîte (1) comprend un couvercle (6) pourvu d'au moins une ouverture (62-64), ladite ouverture étant prévue pour évacuer l'air ventilé par ledit aérateur (10) sur ledit récipient.

7. Application du dispositif selon l'une quelconque des revendications 1 à 6 à une commande de température d'un récipient dans un véhicule.
